(19) Europäisches Patentamt

European Patent Office

Office européen des brevets

(11) **EP 0 966 780 B1**

(12) **EUROPEAN PATENT SPECIFICATION**

(45) Date of publication and mention
of the grant of the patent:
**27.03.2002 Bulletin 2002/13**

(51) Int Cl.[7]: **H02G 15/18**, H01R 4/00

(21) Application number: **97935299.4**

(86) International application number:
**PCT/US97/13716**

(22) Date of filing: **17.07.1997**

(87) International publication number:
**WO 98/40941 (17.09.1998 Gazette 1998/37)**

(54) **COMPACT COVERING DEVICE**

VORRICHTUNG ZUM KOMPAKTEN UMHÜLLEN

DISPOSITIF COUVRANT COMPACT

(84) Designated Contracting States:
**DE FR GB IT**

(30) Priority: **13.03.1997 US 816604**

(43) Date of publication of application:
**29.12.1999 Bulletin 1999/52**

(73) Proprietor: **MINNESOTA MINING AND
MANUFACTURING COMPANY
St. Paul, Minnesota 55133-3427 (US)**

(72) Inventors:
• **WENTZEL, Carl, J.
Saint Paul, MN 55133-3427 (US)**

• **FREIWALD, Frank
Saint Paul, MN 55133-3427 (US)**
• **SADLO, James
Saint Paul, MN 55133-3427 (US)**

(74) Representative:
**Hilleringmann, Jochen, Dipl.-Ing. et al
Patentanwälte
von Kreisler-Selting-Werner,
Postfach 10 22 41
50462 Köln (DE)**

(56) References cited:
**EP-A- 0 136 154      EP-A- 0 281 353
WO-A-95/29524      DE-C- 19 523 436**

## Description

The present application relates to a covering device for applying an elastic cover to elongate object, in particular, to applying insulating, conducting or sealing sleeves to elongate objects such as pipes, tubes and low voltage, medium voltage and high voltage cables.

It is known to apply tubings to elongate objects such as pipes or cables by means of radially expanded elastic products which are then shrunk down either by heat or by removal of an internal or external hold-out device. It is also known to apply insulating, stress grading, conductive and sealing tubular devices to cable accessories in the same manner. Such known covering devices have the disadvantage that when joining pipes or cables, the complete length of the covering device must be made free on one side of the junction and the covering device slid over this side and parked while the junction is made. The covering device is installed by centralizing it over the junction and then shrinking it down either by the application of heat or by the removal of the external or internal hold out. It is already known that it would be advantageous to make the covering device more compact, so that the parking space and the length of the packing case required is reduced. For instance, it is known to use two covering devices with a length somewhat longer than half of an integral covering device and to park each half on either side of the junction. The junction is completed by shrinking each half on the respective side of the junction with an overlap in the middle.

It is also known to nest two of the covering devices together, one inside the other and to park these nested covering devices on one side of the junction. It is also known to use a wrap-around product for sealing and repair purposes e.g. US-A-3 379 218, DE-C-3317379 or US-A-3 455 336. One such device makes use of a metal channel closure which holds together two specially formed longitudinal rails attached to a generally sheet-like material as known from the HDCW repair sleeves supplied by 3M Belgium BV, Diegem, Belgium. This covering device requires no parking space and may be applied after the junction has been made. It can have the disadvantage that the wall thickness of the sheet material is limited. With large thicknesses it is possible that the tension developed in the sheet material on shrinking is sufficient to pull the longitudinal rails out of the holding channel. The requirement to use low wall thicknesses increases the probability of splitting during the shrinking process. Further, the known wrap-around device is not suitable for medium or high voltage insulation purposes in which the metal rail is subject to high electrical fields. The presence of the metal rail may cause electrical discharge. It is known to cut off metal rail after installation but where the insulating material is sandwiched between high and low voltage electrodes there may still be voids left in the interface at the overlap of the sheet material.

Further, there is a general requirement to avoid heat-shrinkable products wherever possible because of the additional requirement of providing a heat source, and of the undesirability of a flame when a burner is used. In addition, there is a danger of scorching the material when thick-walled tubings are installed by heat shrink techniques.

Cables such as telecommunication cables can be terminated by dome closures. Dome closures may include equipment such as electronic devices. Typically these devices are first connected to the cable followed by a sealing closure which may be a heat shrinkable or cold shrinkable long sealing end cap or dome. This procedure requires sufficient parking space to locate the dome closure at the end of the cable as it is slipped over the end. Finally EP-A-281 353 discloses a covering device for covering an elongate object such as an electric cable that comprises a folded elastic element having an inner portion and at least one coaxially disposed outer tubular portion overlaying said inner portion, said inner portion and said outer tubular portion being continuously joined at a circumferential edge.

Despite the considerable development work to produce compact covering devices, no solution has been provided which is easy to install, requires a short parking distance, is applicable for all the tube thickness required for covering elongate objects in general and cable accessories for low voltage, medium voltage and high voltage use in particular and is also suitable in layered constructions in which the interfaces are placed under electrical stress. Further, no solution has been available for very large diameter non-heat-shrinkable tubings.

It is the object of the present invention to provide a covering device for covering an elongate object which covering device is easy to install and requires a short parking distance.

According to the invention this object is solved by the covering device of claim 1. Claim 19 relates to a method of applying such a covering device to an elongate object. The subclaims are directed to additional embodiments.

The present invention includes a covering device for covering an elongate object, comprising a folded elastic element having an inner portion and at least one coaxially disposed outer tubular portion overlaying said inner portion, said inner portion and said outer tubular portion being continuously joined at a circumferential edge; and a first hollow support coaxially disposed around said inner portion, said first hollow support holding said outer tubular portion in a radially stretched condition and being adapted to be removed progressively from said outer tubular portion starting at the end thereof closest to said circumferential edge.

The folded elastic element may have an elasticity and thickness, such that on progressive removal of said first hollow support core, each incremental portion of said outer tubular portion which becomes no longer supported, retracts radially and moves in the direction so as to recover that incremental portion of said folded elastic element onto the elongate object.

The present invention also includes a method of covering an elongate object, comprising the steps of providing a covering device, comprising a folded elastic element having an inner portion and at least one coaxially disposed outer tubular portion overlaying said inner portion, said inner portion and said outer tubular portion being continuously joined at a circumferential edge; a first hollow support coaxially disposed around said inner portion, said first hollow support holding said outer tubular portion in a radially stretched condition; placing said covering device coaxially with the elongate object; removing said first hollow support progressively from said outer tubular portion starting at the end thereof closest co said circumferential edge such that each incremental portion of said outer tubular portion which becomes no longer supported, retracts radially.

Dependent claims define further embodiments of the present invention.

The present invention provides the advantage that less space is required to install a covering device of a specific length than conventional covering devices.

The present invention also provides the advantage that less disposable materials are needed for installation of the covering device.

The present invention provides the advantage that a smaller packaging for the covering device may be used, thus reducing freight charges when these are volume dependent and also reducing the environmental burden of disposing of discarded packaging materials.

The present invention further provides increased stability to non-heat-shrinkable tubings. The present invention also provides stable non-heat-shrinkable tubings of a large diameter.

The invention, its further embodiments and advantages are described in the following with reference to the drawings in which

Fig. 1 shows a schematic cross-sectional representation of a compact covering device in accordance with a first embodiment of the present invention.
Fig. 2 shows a modification of the compact covering device in accordance with Fig. 1.
Fig. 3 shows a schematic representation of a cross-section of a compact covering device in accordance with a second embodiment of the present invention.
Fig. 4 shows a schematic cross-sectional representation of a modification of the compact covering device in accordance with Fig. 3.
Fig. 5 shows a schematic cross-sectional representation of a modification of the covering device in accordance with the second embodiment.
Figs. 6A and 6B show schematic cross-sectional representations of a covering device in accordance with the second embodiment.
Figs. 7A and 7B show schematic cross-sectional representations of the covering device according to Figs. 6A and 6B being installed on a cable joint splice.
Fig. 8 shows a schematic cross-sectional representation of a covering device in accordance with a third embodiment of the present invention.
Fig. 9 shows a schematic representation of a covering device in accordance with the third embodiment of the present invention.
Fig. 10 shows a schematic representation of a covering device according to Fig. 9 parked on a cable joint before installation.
Fig. 11 shows a schematic representation of the covering device according to Fig. 9 installed on a cable joint.
Fig. 12 shows a schematic cross-sectional representation of a covering device in accordance with a fourth embodiment of the present invention.
Fig. 13 shows a schematic cross-sectional representation of the covering device of Fig. 12 installed on a cable.

In the following, the invention will be described with reference to certain specific embodiments and to the drawings. The invention is not limited thereto but only by the claims. The drawings are schematic representations only and do not limit the invention. Certain components of the invention as displayed in the drawings have been exaggerated in their thicknesses or lengths in order to improve the clarity of the drawings. The invention will be described with respect to covering devices for electrical cables and electrical jointing accessories such as cable joints and terminations but the present invention is not limited thereto. The present invention may be used for coverings suitable for any application e.g. for sealing pipe joints.

All the embodiments of the invention relate to the use of an elastic covering element which may have at least one portion with a substantially uniform diameter when in its recovered, stress-free state. For instance, the elastic covering element may be made from an elastic tube which may be expanded to a larger diameter and subsequently shrink back to substantially its original dimensions when the expanding force is removed. No restriction is anticipated on the chemical nature of the elastic covering element except that it must possess elasticity which allows it to be stretched and then to shrink to substantially its original dimensions. Rubbery elastomers such as natural rubber, natural and synthetic polyisoprenes, cis-polybutadiene and styrene butadiene rubber, butadiene-acrylonitrile. rubber, polychloroprene, (neoprene), butyl rubber, polysulphide rubber, silicone rubber, including liquid silicone rubber, urethane rubber, polyacrylate rubber, epichlorhydrin homo- and copolymer rubbers, propylene oxide rubber, fluorosilicone rubber, fluorocarbon rubber, chloro-sulphonated polyethylene rubber, chlorinated polyethylene rubber, ethylene-propylene rubber, ethylene-propylene-diene monomer terpolymer rubber (EPDM), nitroso rubber or phosphonitrilic rubber may be suitable. Preferred materials include ethylene-propylene-diene monomer terpolymers (EPDM) and silicone rubbers. Any of the above materials may be formulated to a variety of compositions by including flame retardants, conductive materials, materials to improve weathering properties, materials to produce electrical stress grading properties, glass or carbon fibers, inert fillers, etc. In particular the elastic covering element may be insulating, conductive or electrically stress grading as required for medium or high voltage applications.

The elastic covering element is preferably made from a material with a low permanent set. Permanent set may be measured best by expanding a tube of the elastic material having a known initial relaxed inner diameter to the required expansion ratio and holding it there with a suitable support. The expanded tube is then stored for a long period, e.g. 6 months or more, at the desired temperature until the material has reached a relatively stable state where the rate of further change is minimal. The tube is then removed from the support and allowed to relax. The final relaxed inner diameter is compared to the initial relaxed diameter. The permanent set in percent is then given by:

$$\frac{\text{Final Diameter - Initial Diameter}}{\text{Initial Diameter}} = \% \text{ Permanent Set}$$

A permanent set of less than 30% is preferred. The material of the elastic covering element is preferably stable and durable. It is preferable if the elastic covering element is suitable for continuous use at temperatures experienced during load cycling of cables in the range of 0°C - 90°C, typically of the order of 25°C to 75°C. Further it is preferred if the elastic element is resistant to environmental influences, such as fungus, UV light, abrasion, cable oils and greases and moisture. It is preferred if the elastomeric material making up the elastic covering element is cross-linked. The elastic covering element may be extruded or molded or fabricated from woven or knitted elastic fibers. The elastic covering element according to the invention may also be made from laminating or co-extruding differing materials in order to obtain the required blend of properties.

The elastic covering element may be of circular cross-section but is not limited thereto. The elastic covering element may be, for instance, oval in cross-section. The elastic covering elements in accordance with the invention are typically medium walled tubes. Typical unstretched inner sleeve diameters lie in the range 5 to 100 mm, preferably 5 to 50 mm, and unstretched tube thicknesses in the range 1 to 5 mm, preferably 1 to 3 mm whereby the thicker tubes are generally used for the larger diameters.

In all the embodiments of the invention, at least a portion of the elastic covering element is supported on a support in a radially stretched condition. It is preferred if the expansion ratio of the elastic sleeve on the support compared with its recovered diameter is as high as possible without risking splitting of the sleeve or excessive permanent set. It is preferred if the expansion ratio is at least 3 to 1. This is achievable with the preferred materials EPDM and silicone rubber. Where reference is made in this application to highly expanded or highly stretched with reference to the elastic sleeve, it is understood that the expansion ratio is 3 to 1 or greater.

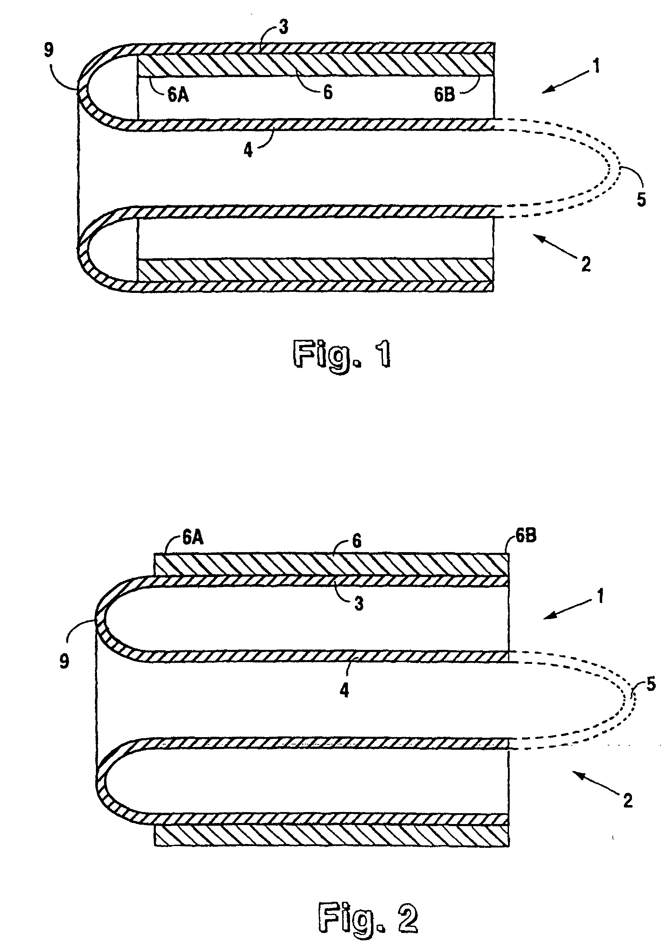

Fig. 1 shows a schematic cross-sectional representation of a covering device 1 in accordance with a first embodiment of the present invention. The elastic covering element 2 includes a inner portion 4 as well as an outer folded-back portion 3 which is coaxially disposed around and overlays the inner portion 4. Outer portion 3 is held in a radially expanded condition by an internal removable support 6. Inner portion 4 may be substantially tubular and either be open at both ends or may be closed at one end as indicated by the reference numeral 5 or it may be solid (not shown).

Outer tubular portion 3 is folded back over inner tubular portion 4 forming a circumferential fold 9. As shown in Fig. 1, the internal removable support 6 maintains the radially expanded condition of outer portion 3 of the elastic covering element 2 by supporting outer portion 3 from the inside. The support 6 is disposed coaxially with respect to the inner portion 4 and surrounds inner portion 4. The support 6 may be any suitable removable core such as those described in accordance with WO-A-95/11542, EP-A-0702444, US-A-5 098 752, EP-A-0631357, EP-A-0631117, EP-A-0500216, EP-A-0399263, US-A-3 515 798, US-A-4 503 105, DE-A-3 943 296, WO-A-95/31845, EP-A-291213 (all of which are incorporated herein by reference) or similar. Where support core 6 is a collapsible core, it is preferred if the core is collapsed starting from the end 6A closest to the fold between inner portion 4 and outer portion 3. For example, the support core 6 may be a helically wound support including a helically wound flexible strip which has adjacent coils, the envelope of the adjacent coils forming an outer support surface. The coils may be interconnected to provide increased support. The free end of the helical coils used to start collapse of the support core 6 at end 6A should be reachable by the operator at the open end 6B of core 6. For this purpose, a length of the flexible strip may extend from end 6A towards end 6B through the space between the inside surface of support core 6 and the outer surface of inner portion 4. By pulling on the free end, the core 6 is unwound.

The embodiment according to Fig. 1 may have the disadvantage that the location of support core 6 or the inside of the portion 3 of elastic covering element 2 and the piece of material of the core 6 which lies between core 6 and elastic covering element 2 may render removal of core 6 difficult. Fig. 2 shows a schematic cross-sectional representation of a modification of the first embodiment of the present invention which allows easy access to core 6. In accordance with the modification, the outer sleeve portion 3 is held in a radially stretched condition by means of an external support or hold-out 6. Hold out 6 may be an external support as described in US-A-4 135 553, US-A-4 179 320, US-A-4 656 070, US-A-4 585 607, DE-A-4 233 202 (all of which are incorporated herein by reference) or similar. Such an outer core 6 may have, however, the disadvantage of being more difficult or more expensive to manufacture or more difficult to release reliably.

Figs. 3 to 5 show schematic cross-sectional representations of a covering device 10 according to a second embodiment of the present invention. Components with the same reference numbers in Figs. 1 to 5 refer to the same items. In Fig. 3 the covering device 10 has an elastic covering element 2 having an outer elastic tubular portion 3 supported by an internal removable support core 6 which holds outer portion 3 in a radially expanded condition. The elastic element 2 also has an inner elastic tubular portion 7 which is held in a radially expanded state by a further internal removable support 8. Tubular portion 7 may be open or closed as indicated by the end 5. Outer tubular portion 3 is folded back over inner tubular portion 7 forming a circumferential fold 9.

Covering device 10 is installed by first removing support 8 starting at the end 8B remote from the fold 9. Support 8 may be withdrawn from inner tubular portion 7 or may be collapsed starting at end 8B. This causes tubular portion 7 to recover to its original dimensions. Then support 6 is removed by either withdrawing support 6 from outer tubular portion 3 or by collapsing support 6 starting at end 6A.

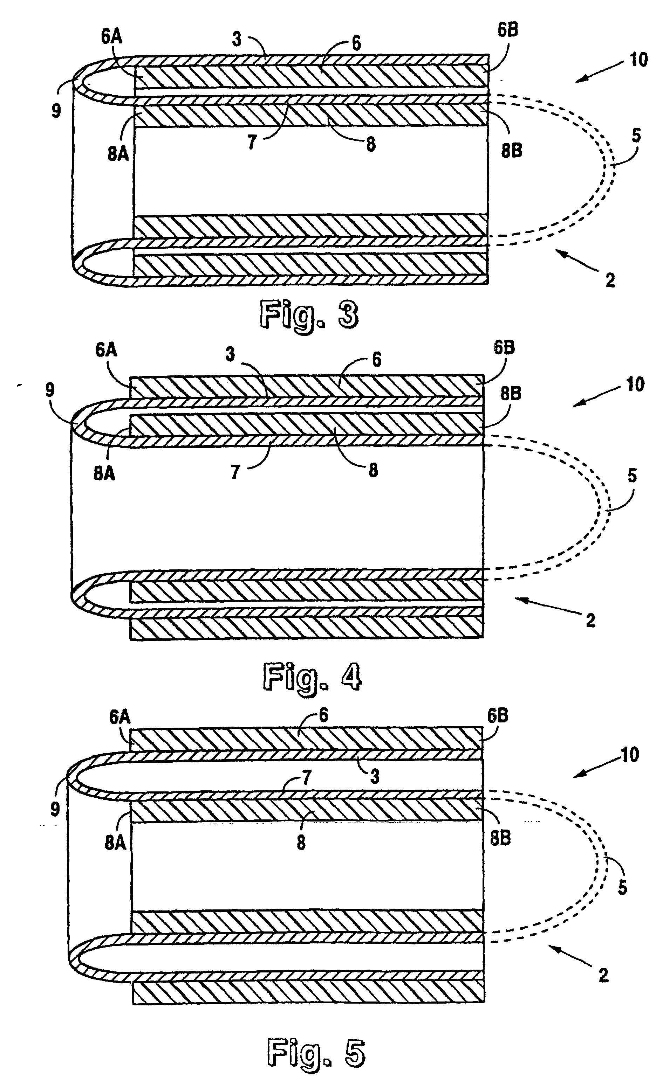

Fig. 4 shows a modification of covering device 10 as described with reference to Fig. 3 in which both supports 6 and 8 are external hold-out supports of the type described with reference to Fig. 2. To install this device 10 the inner support 8 is first removed starting at end 8A or 8B and working towards the opposite end. Then the outer support 6 is removed starting at end 6A and working towards 6B.

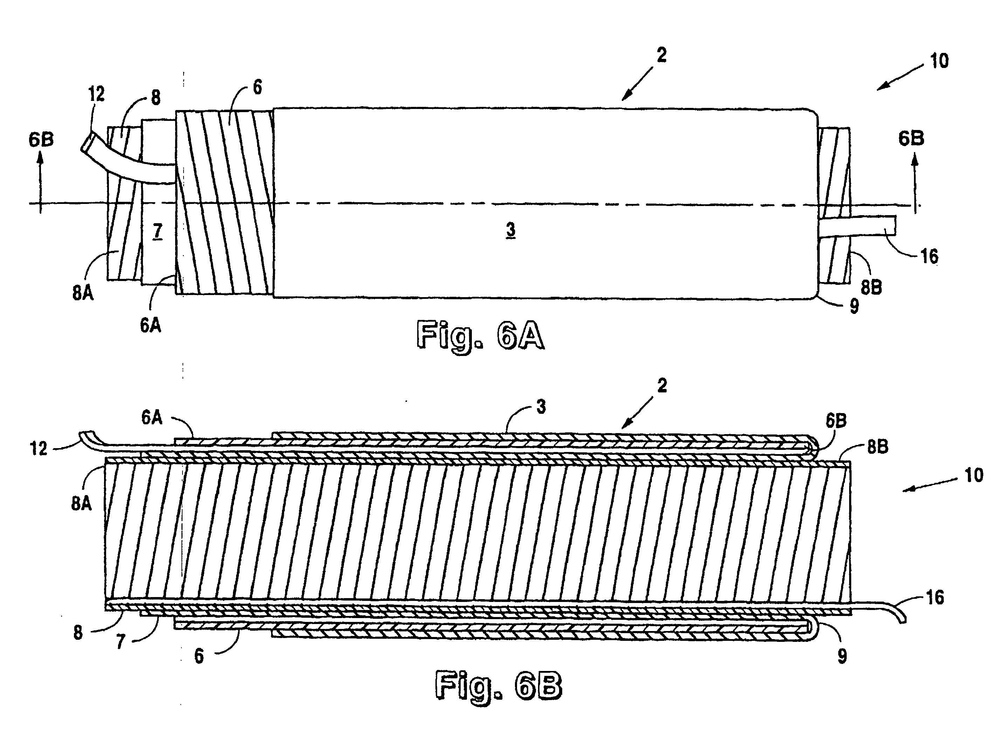

Fig. 5 shows a further modification of the covering device 10 in accordance with the second embodiment in which the inner support 8 is an internal support core of the type described with reference to Fig. 1 and the outer support 6 is an external hold-out support of the type described with reference to Fig. 2. This device 10 is installed by first removing the inner support 8 starting at end 8A or 8B and then working towards the opposite end. Then outer support 6 is removed starting at end 6A and working towards 6B.

Figs. 6A shows a practical example of a covering device 10 in accordance with the second embodiment of the present invention shown schematically in Fig. 3. Fig. 6B shows a cross-section through Fig. 6A. An elastomeric tubing 2 is expanded radially and folded back on itself to form an outer elastic tube element 3 and an inner elastic tube element 7. The outer elastic tube element 3 is supported in the expanded state by means of a removable hollow core 6. The inner elastic tube element 7 is supported in the expanded state by means of a removable hollow core 8. Hollow core 8 has a smaller diameter than hollow core 6. Elastomeric tubing 2 could be any suitable rubber material, e.g. an EPDM tubing. Hollow cores 6 and 8 may be spirally wound strips of plastic material whose outer envelope forms a support surface.

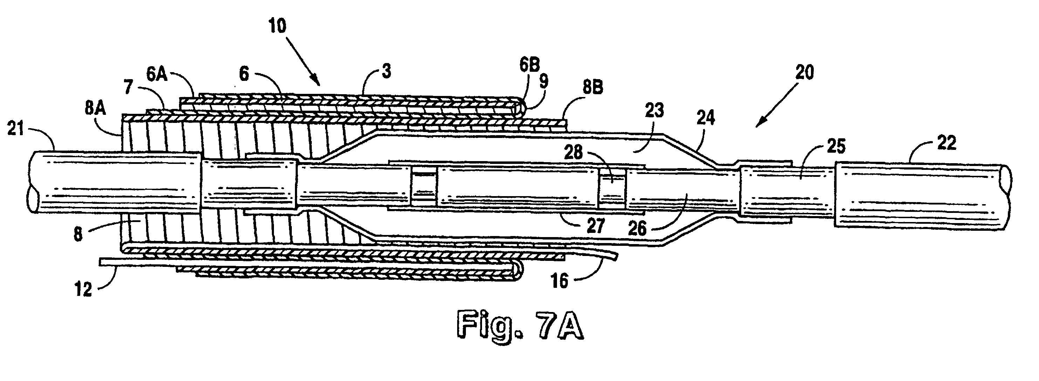

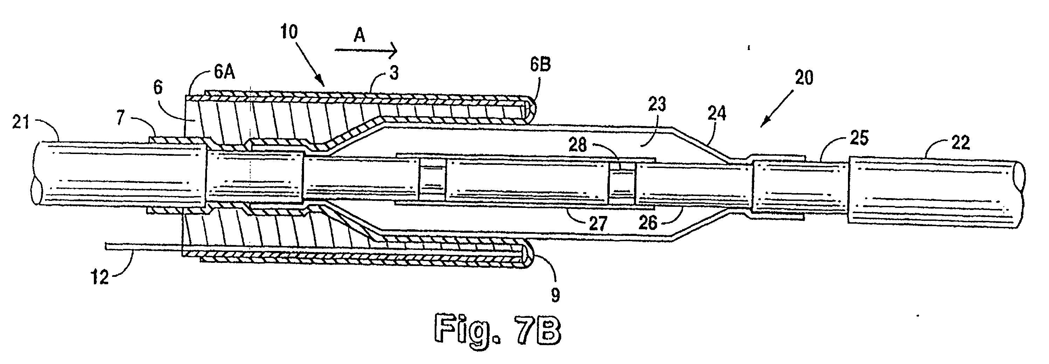

The installation of covering device 10 will be described with reference to Figs. 7A and 7B. The covering device 10 as shown in Figs. 6A and 6B may be installed by first locating the device 10 over an elongate object 20 to be covered. The elongate object 20 may be a medium voltage cable 21 to be jointed to a further cable 22. The completed cable joint may include two cables 21, 22, joint insulation 23 covered by a conductive electrostatic and earth fault shield 24 which overlaps onto a metal sheath or shield 25. The joint insulation 23 surrounds the cable insulation 26 as well as the conductor connector 28. The connector 28 may be electrostatically screened by means of a conductive Faraday cage 27. Such joints are known from DE-A-39 43 296, for example. Device 10 is located so that the circumferential fold 9 is approximately in the middle of the joint. Hollow core 8 is then removed by pulling on free end 16 which results in the spiral turns of hollow core 6 unwinding starting at the end 8A. Inner tube element 7 collapses progressively onto the underlying joint until the core 8 has been completely removed as shown in Fig. 73. Core 6 is then removed by pulling on free end 12 which results in the spiral turns of hollow core 8 unwinding starting at end 6B. Outer tube element 3 collapses progressively towards end 6A onto the underlying elongate object. The tension in each incremental portion of the expanded outer element 3 relaxes as the support for the incremental portion provided by the hollow core 6 is removed. The relaxing portions of outer tube element 3 are pulled radially towards the joint and also longitudinally in the direction of cable 22 in such a manner that the elastomeric tube 2 is installed in the unfolded condition over the complete joint. To assist in the correct unfolding of elastic tube 2, the covering device 10 may be pushed gently in the direction of the arrow "A" in Fig. 7B. The thickness and elasticity of tube elements 3 and 7 is normally such for covering devices for cable accessories such as cable joints that a collapsing incremental portion of tube elements 3 or 7 automatically pulls the still expanded portion of these tube elements 3 and 7 in the direction "A". If, however, the force required to pull out the free ends 12 and 16 is high, this pulling force may counteract the natural tendency of tube elements 3 and 7 to recover into the unfolded condition. To prevent this one hand may be used to steady the covering device 10 or to urge it in the direction "A" while free ends 12 and 16 are pulled in the opposite direction. Thus, it is possible to install the covering device reliably by using both hands, one to steady device 10 and one to pull on the free ends 12 and 16. The natural tendency of the tube elements 3 and 7 to install themselves in the unfolded condition due to their thickness and elasticity means that the installer can concentrate on collapsing support cores 6 and 8 knowing that the tube elements 3 and 7 will install correctly and autonomously.

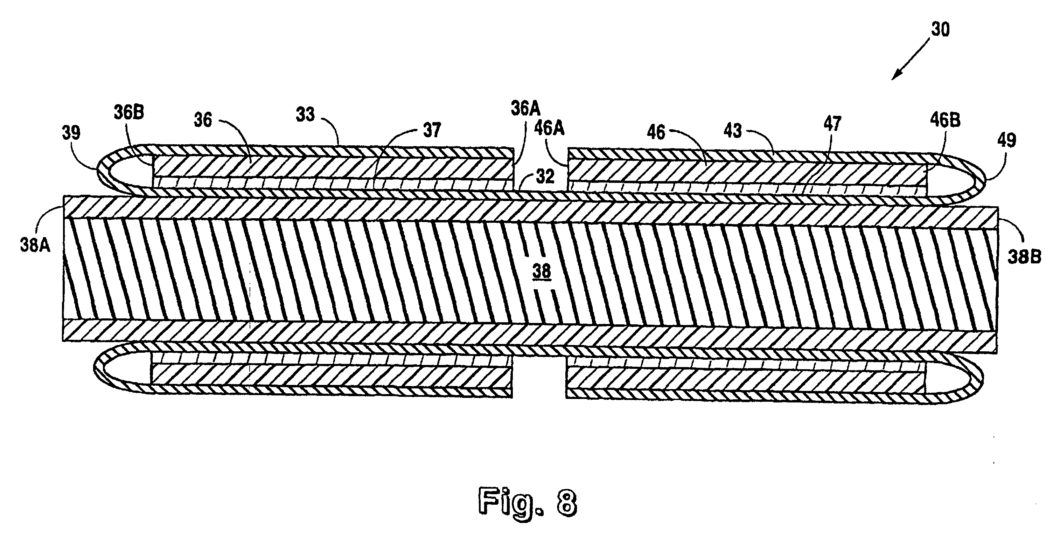

Fig. 8 shows schematically in cross-section a covering device 30 in accordance with a third embodiment of the present invention. An elastomeric tubing 32 is expanded radially and folded back on itself to form two outer tube elements 33, 43 each supported respectively by hollow removable support cores 36 and 46. The inner tube elements 37 and 47 are supported in a radially expanded state by hollow support core 38. Internal support cores 36, 46 and 38 are shown but any of the internal or external support core combinations described with respect to Figs. 1 to 5 may be substituted for the shown support cores. Covering device 30 is installed by centering it over an elongate object to be covered (not shown) and then first removing hollow core 38 starting at end 38 A or 38B. This results in the inner tube elements 37 and 47 collapsing onto the elongate object. Subsequently hollow support cores 36 and 38 are each removed as previously described resulting in outer tube elements 33 and 43 installing themselves on either side of the collapsed inner tube elements 37, 47.

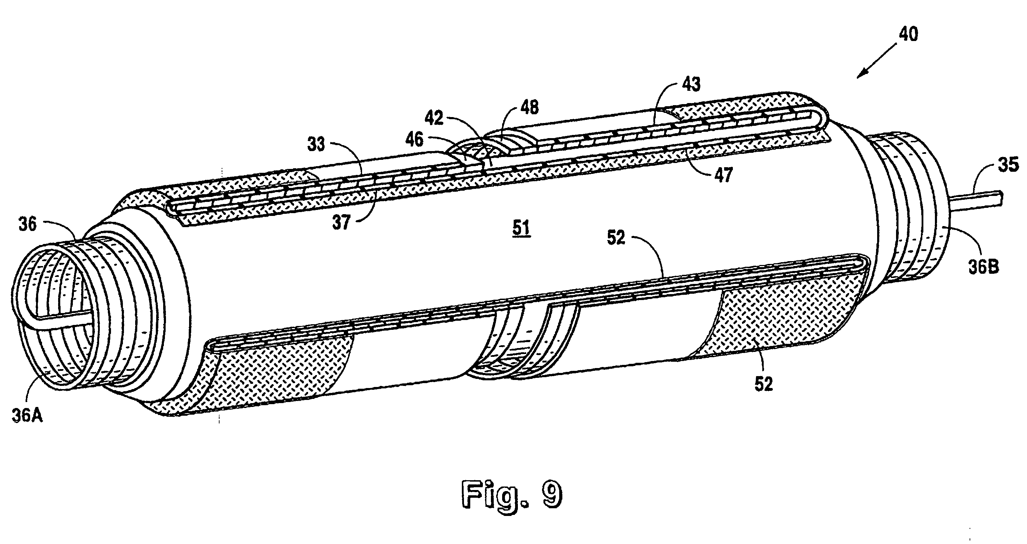

Figs. 9, 10 and 11 show schematic representations of an example of a covering device 40 in accordance with a third embodiment of the present invention. As shown in Fig. 9, covering device 40 comprises an inner hollow removable core 36 which supports a further functional elastomeric tubular member 51 in the radially expanded condition. Elastomeric tubular member 51 may be any suitable elastomeric substantially tubular component or components such as a medium voltage joint insulating sleeve in accordance with DE-A-39 43 296. Hollow core 36 may be removed by pulling on free end 35 at the end 36B which results in the hollow core 36 collapsing starting at the end 36A. Over the tubular joint sleeve member 51 is placed an expanded metal sock 52 which may be made from tin-coated copper wires. Copper sock 52 is longer than tubular joint sleeve member 51. Over copper sock 52 is placed a further elastomeric tube element 42 which is held in a radially expanded state by the joint sleeve 51. Tube element 42 comprises two adjoining inner tube elements 37 and 47 and two folded back outer tube elements 33 and 43 which are respectively held in a radially expanded state by hollow removable support cores 46 and 48. The ends of copper sock 52 which extend beyond the joint sleeve 51 are also folded back so that they rest on top of the outer tube elements 33 and 43.

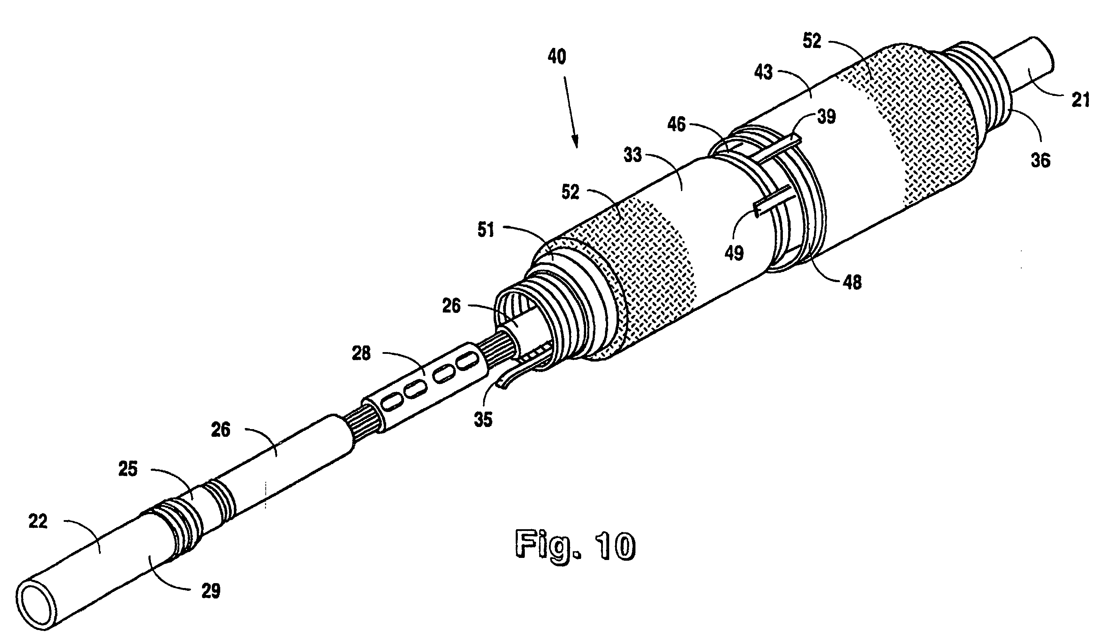

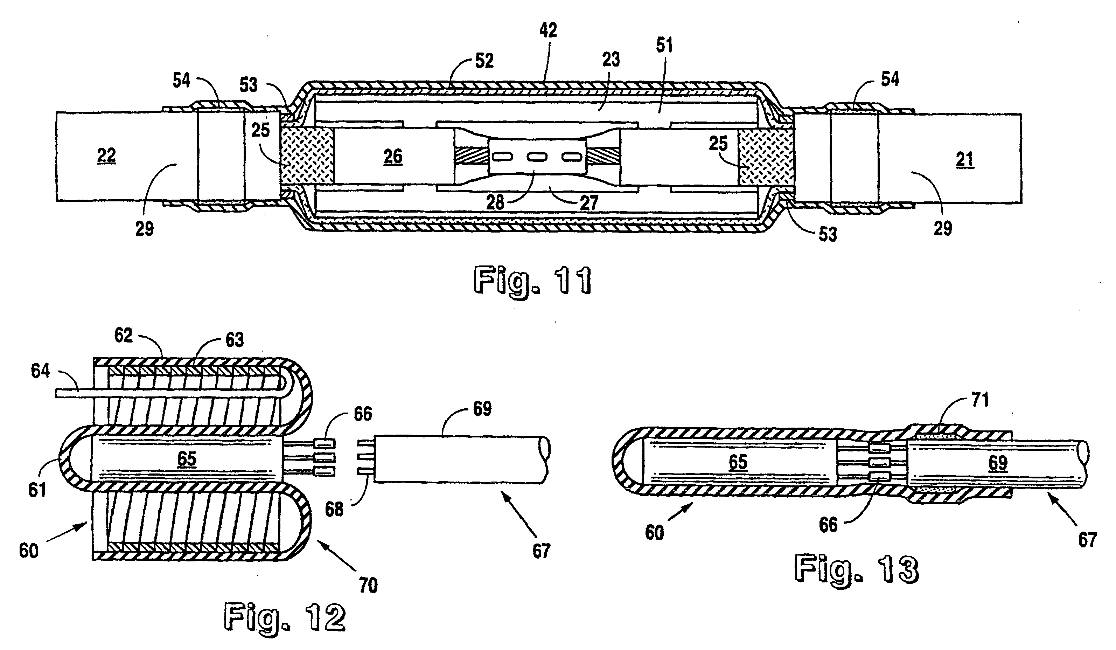

The installation of covering device 40 will be described with reference to Figs. 10 and 11. The covering device 40 is placed over a cable 21 to be jointed to a second cable 22. The cable ends are prepared for jointing including exposing the cable insulation 26, connecting the cable conductors with connector 28 and preparing the electrostatic and earth shields 25. Covering device 40 is then centered over the cable joint and hollow core 36 removed by pulling on free end 35. This results in joint sleeve 51 collapsing onto the cable joint taking with it the inner tube elements 37 and 47. The outer portions of copper sock 52 are now folded down onto the cables 21 and 22 and connected to the shields 25 by suitable clamps 53. Adhesive or mastic sealing strips 54 may be wrapped around the cable sheaths 29 at locations adjacent to their ends as best shown in Fig. 11. Finally, outer hollow cores 46 and 48 are removed in turn by pulling on free ends 39 and 49 respectively. This results in the outer tube elements 33 and 43 collapsing radially and moving longitudinally away from the center of the joint so that elastomeric sleeve 42 is finally installed in the unfolded condition on the cable jackets 29 of cables 21 and 22.

Fig. 12 shows a schematic representation of a dome closure 60 in accordance with a fourth embodiment of the present invention. The dome closure 60 includes an elastic member 70 which consists of a non-expanded closed portion 61 and a folded back expanded portion 62 supported by a hollow support 63. The elastic member 70 may be made of any of the materials described with reference to the previous embodiments. The hollow support 63 is shown as an internal support core but the invention is not limited thereto. Support core 63 may be a helically wound strip with a free end 64 of the strip but the invention is not limited thereto. The support 63 may be any of the supports described with respect to the previous embodiments. The closed portion 61 may include an electronic device 65 with connectors 66 for connection to, and termination of the conductors 68 of a cable 67. Cable 67 may have an outer cable sheath 69.

The dome closure 60 is installed by first connecting the connectors 66 to the conductors 68 as shown in Fig. 13. Mastic sealing strips 71 are then wound around cable sheath 69 adjacent to the end of cable 67. The free end 64 is then pulled to incrementally remove the support 63 so that expanded tubular portion 62 collapses incrementally and radially. Due to the elasticity and thickness of the elastic member 70, the radially shrinking incremental portions of tubular portion 62 move towards the cable 67 thus collapsing the elastic member 70 onto the cable 67 in the non-folded condition. As explained previously, the dome closure 60 may be steadied with one hand or pushed lightly in the installing direction to counteract or balance the force required to remove the free end 64. The elastic member 62 is sealed to the cable sheath 69 by means of the mastic sealing strips 71.

A further advantage of the present invention is the increased stability of covering devices in accordance with the present invention compared with conventional covering devices. The support core for supporting an expanded elastic tubing is subject to a relatively uniform outer pressure from the expanded elastic tubing. This external pressure can cause collapsing of the support case, for instance by buckling. This effect can be enhanced by the uneven thickness of the expanded tubing which results in an uneven pressure on the support core. Subject to this uneven pressure, the support core takes on an oval shape which is easier to collapse than a perfect circular cylinder. As explained in "Strength of Materials" Part II Advanced by S. Timoshenko, third edition, Van Nostrand 1958, page 190, ellipticity is the most important defect which determines premature collapse of circular supporting tubular cores. As the diameter of the support cores and expanded elastic tubings increases, the defects may become more pronounced and thus premature collapse more common. Further, for given materials, the thickness of support cores required to support large diameter expanded elastic tubings is a fast function of the diameter. Hence, there has been a natural limit to the size of tubings which can be reliably supported by collapsible support cores.

It has been found unexpectedly that covering devices in accordance with the present invention of the types shown in Figs. 3 to 11 are more stable at large diameters than expanded tubings on a single support core. One reason for this may be the synergistic stabilising effect of two support cores radially disposed about each other as shown in these figures.

It is believed that this synergistic, mutually stabilising effect caused by axially arranged support cores of different diameters is related to the effect of counterbalanced ovality. For example, with reference to Fig. 3, if the support core 8 becomes oval in one direction with its widest diameter, having a certain axis, the outer folded back portion 3 of the elastic tubing 2 generates an ovality in outer support core 6 which has a larger diameter along an axis roughly 90° to the large diameter axis of support core 8. Thus, any attempt of support core 8 to become more oval and to start collapsing is retained by the diameter of support core 8 reducing along this axis and vice versa.

Through this synergistic counterbalanced ovality of axially arranged support cores, it is possible to produce stable large diameter expanded tubings with expansion ratios in excess of 2:1 or 3:1 and expanded diameters more than 150 mm, more than 200 mm or even more than 250 mm.

## Claims

1. A covering device for covering an elongate object, comprising:

    - a folded elastic element (2) having an inner portion (4) and at least one coaxially disposed outer tubular portion (3) overlaying said inner portion (4), said inner portion (4) and said outer tubular portion (3) being continuously joined at a circumferential edge (9),

    **characterized by**

    - a first hollow support (6) coaxially disposed around said inner portion (4), said first hollow support (6) holding said outer tubular portion (3) in a radially stretched condition and being adapted to be removed progressively from said outer tubular portion (3) starting at the end (6A) thereof closest to said circumferential edge (9).

2. A covering device according to claim 1, wherein said inner portion is an inner tubular portion (4) and further comprising a second support holding (8) said inner tubular portion (4) in a radially stretched condition and being adapted to be removed progressively from said inner tubular portion (4).

3. A covering device according to claim 1, wherein said first hollow support (6) is disposed on the outer surface of said outer tubular portion (3).

4. A covering device according to claim 1, wherein said first hollow support (6) is disposed on the inner surface of said outer tubular portion (3).

5. A covering device according to claim 2, wherein said first hollow support (6) is disposed on the outer surface of said outer tubular portion (3).

6. A covering device according to claim 2, wherein said first hollow support (6) is disposed on the inner surface of said outer tubular portion (3).

7. A covering device according to claim 2, wherein said second support (8) is disposed on the outer surface of said inner tubular portion (4).

8. A covering device according to claim 2, wherein said second support (8) is disposed on the inner surface of said inner tubular portion (4).

9. A covering device according to claim 5, wherein said second support (8) is disposed on the outer surface of said inner tubular portion (4).

10. A covering device according to claim 5, wherein said second support (8) is disposed on the inner surface of said inner tubular portion (4).

11. A covering device according to claim 6, wherein said second support (8) is disposed on the outer surface of said inner tubular portion (4).

12. A covering device according to claim 6, wherein said second support (8) is disposed on the inner surface of said inner tubular portion (4).

13. A covering device according to any one of claims 1 to 12, wherein said first hollow support (6) includes a helically wound flexible strip forming adjacent coils and the envelope of the coils defining an outer surface.

**14.** A covering device according to claim 2 and any one of claims 3 to 13, wherein said second support (8) is hollow.

**15.** A covering device according to claim 8, wherein said second hollow support (8) includes. a helically wound flexible strip forming adjacent coils and the envelope of the coils defining an outer surface.

**16.** A covering device according to claim 8 wherein at least one tubular elastic member is located between said inner tubular portion (4) and said second support (8), said second support (8) holding said tubular member in a radially stretched condition.

**17.** A covering device according to any one of claims 1 to 16, wherein said folded elastic element (2) has an elasticity and thickness, such that on progressive removal of said first hollow support core (6), each incremental portion of said outer tubular portion (3) which becomes no longer supported, retracts radially and moves in the direction so as to recover said each incremental portion of said folded elastic element (2) onto the elongate object

**18.** A covering device according to any one of claims 1 to 17 wherein the inner expanded diameter of said outer tubular portion (3) is at least 150mm, more preferably at least 200mm and most preferably at least 250mm.

**19.** A method of covering an elongate object, comprising the steps of:

- providing a covering device (1), comprising a folded elastic element (2) having an inner portion (4) and at least one coaxially disposed outer tubular portion (3) overlaying said inner portion (4), said inner portion (4) and said outer tubular portion (3) being continuously joined at a circumferential edge (9); a first hollow support (6) coaxially disposed around said inner portion (4), said first hollow support (6) holding said outer tubular portion (3) in a radially stretched condition;
- placing said covering device (1) coaxially with the elongate object (20);
- removing said first hollow support (6) progressively from said outer tubular portion (3) starting at the end (6A) thereof closest to said circumferential edge (9) such that each incremental portion of said outer tubular portion (3) which becomes no longer supported, retracts radially.

**20.** A method according to claim 19 wherein said removing step of said first hollow support (6) causes said outer tubular portion (3) to move in the direction so as to recover said each incremental portion of said folded elastic element (2) onto the elongate object (20).

**21.** A method according to claim 19 or 20, wherein said covering device (1) further comprises said inner portion being an inner tubular portion (4) and a second support holding (8) said inner tubular portion (4) in a radially stretched condition, said method further comprises the step of removing said second support (8) before the step of removing said first hollow support (6) such that said inner tubular portion (4) retracts radially.

## Patentansprüche

**1.** Abdeckvorrichtung zum Abdecken eines länglichen Gegenstandes, mit:

- einem gefalteten elastischen Element (2) mit einem inneren Bereich (4) und wenigstens einem koaxial angeordneten äußeren rohrförmigen Bereich (3), der den inneren Bereich (4) überlagert, wobei der innere Bereich (4) und der äußere Bereich (3) an einem Umfangsrand (9) durchgehend verbunden sind,

**gekennzeichnet durch**

- eine erste hohle Stützeinrichtung (6), die koaxial um den inneren Bereich (4) angeordnet ist, wobei die erste hohle Stützeinrichtung (6) den äußeren rohrförmigen Bereich (3) in einem radial gedehnten Zustand hält und zum zunehmenden Entfernen aus dem äußeren rohrförmigen Bereich (3), beginnend an dessen dem Umfangsrand (9) nächstgelegenen Ende (6A), ausgebildet ist.

**2.** Abdeckvorrichtung nach Anspruch 1, bei der der innere Bereich ein innerer rohrförmiger Bereich (4) ist, und ferner mit einer zweiten Stützeinrichtung (8), die den inneren rohrförmigen Bereich (4) in einem radial gedehnten Zustand hält und zum zunehmenden Entfernen aus dem inneren rohrförmigen Bereich (4) ausgebildet ist.

**3.** Abdeckvorrichtung nach Anspruch 1, bei der die erste hohle Stützeinrichtung (6) auf der Außenfläche des äußeren rohrförmigen Bereichs (3) angeordnet ist.

**4.** Abdeckvorrichtung nach Anspruch 1, bei der die erste hohle Stützeinrichtung (6) auf der Innenfläche des äußeren rohrförmigen Bereichs (3) angeordnet ist.

5. Abdeckvorrichtung nach Anspruch 2, bei der die erste hohle Stützeinrichtung (6) auf der Außenfläche des äußeren rohrförmigen Bereichs (3) angeordnet ist.

6. Abdeckvorrichtung nach Anspruch 2, bei der die erste hohle Stützeinrichtung (6) auf der Innenfläche des äußeren rohrförmigen Bereichs (3) angeordnet ist.

7. Abdeckvorrichtung nach Anspruch 2, bei der die zweite Stützeinrichtung (8) auf der Außenfläche des inneren rohrförmigen Bereichs (4) angeordnet ist.

8. Abdeckvorrichtung nach Anspruch 2, bei der die zweite Stützeinrichtung (8) auf der Innenfläche des inneren rohrförmigen Bereichs (4) angeordnet ist.

9. Abdeckvorrichtung nach Anspruch 5, bei der die zweite Stützeinrichtung (8) auf der Außenfläche des inneren rohrförmigen Bereichs (4) angeordnet ist.

10. Abdeckvorrichtung nach Anspruch 5, bei der die zweite Stützeinrichtung (8) auf der Innenfläche des inneren rohrförmigen Bereichs (4) angeordnet ist.

11. Abdeckvorrichtung nach Anspruch 6, bei der die zweite Stützeinrichtung (8) auf der Außenfläche des inneren rohrförmigen Bereichs (4) angeordnet ist.

12. Abdeckvorrichtung nach Anspruch 6, bei der die zweite Stützeinrichtung (8) auf der Innenfläche des inneren rohrförmigen Bereichs (4) angeordnet ist.

13. Abdeckvorrichtung nach einem der Ansprüche 1 bis 12, bei der die erste hohle Stützeinrichtung (6) einen schraubenlinienförmig gewundenen flexiblen Streifen aufweist, der benachbarte Windungen bildet, und die Hüllfläche der Spulen eine Außenfläche bildet.

14. Abdeckvorrichtung nach Anspruch 2 und einem der Ansprüche 3 bis 13, bei der die zweite Stützeinrichtung (8) hohl ist.

15. Abdeckvorrichtung nach Anspruch 8, bei der die zweite hohle Stützeinrichtung (8) einen schraubenlinienförmig gewundenen flexiblen Streifen aufweist, der benachbarte Windungen bildet, und die Hüllfläche der Windungen eine Außenfläche bildet.

16. Abdeckvorrichtung nach Anspruch 8, bei der wenigstens ein rohrförmiges elastisches Teil zwischen dem inneren rohrförmigen Bereich (4) und der zweiten Stützeinrichtung (8) angeordnet ist, wobei die zweite Stützeinrichtung (8) das rohrförmige Teil in einem radial gedehnten Zustand hält.

17. Abdeckvorrichtung nach einem der Ansprüche 1 bis 16, bei der das gefaltete elastische Element (2) eine derartige Elastizität und Dicke aufweist, daß beim zunehmenden Entfernen des ersten hohlen Stützkerns (6) jeder inkrementelle Bereich des äußeren rohrförmigen Bereichs (3), der nicht länger gestützt ist, sich radial zusammenzieht und sich in eine Richtung bewegt, in der sich jeder inkrementelle Bereich des gefalteten elastischen Elements (2) auf den langgestreckten Gegenstand zurückstellt.

18. Abdeckvorrichtung nach einem der Ansprüche 1 bis 17, bei der der innere gedehnte Durchmesser des äußeren rohrförmigen Bereichs (3) mindestens 150 mm, vorzugsweise mindestens 200 mm und höchst vorzugsweise mindestens 250 mm beträgt.

19. Verfahren zum Abdecken eines langgestreckten Gegenstandes mit den folgenden Schritten:

   - Vorsehen einer Abdeckvorrichtung (1) mit einem gefalteten elastischen Element (2) mit einem inneren Bereich (4) und wenigstens einem koaxial angeordneten äußeren rohrförmigen Bereich (3), der den inneren Bereich (4) überlagert, wobei der innere Bereich (4) und der äußere Bereich (3) an einem Umfangsrand (9) durchgehend verbunden sind; einer ersten hohlen Stützeinrichtung (6), die koaxial um den inneren Bereich (4) angeordnet ist, wobei die erste hohle Stützeinrichtung (6) den äußeren rohrförmigen Bereich (3) in einem radial gedehnten Zustand hält;

   - Anordnen der Abdeckvorrichtung (1) koaxial zum langgestreckten Gegenstand (20);

   - zunehmendes Entfernen der ersten hohlen Stützeinrichtung (6) aus dem äußeren rohrförmigen Bereich (3), beginnend an dessen dem Umfangsrand (9) nächstgelegenen Ende (6A), derart, daß jeder inkrementelle Bereich des äußeren rohrförmigen Bereichs (3), der nicht länger gestützt ist, sich radial zusammenzieht.

20. Verfahren nach Anspruch 19, bei dem der Schritt des Entfernens der ersten hohlen Stützeinrichtung (6) bewirkt, daß sich der äußere rohrförmige Bereich (3) in eine Richtung bewegt, in der sich jeder inkrementelle Bereich des gefalteten elastischen Elements (2) auf den langgestreckten Gegenstand zurückstellt.

**21.** Verfahren nach Anspruch 19 oder 20, bei dem die Abdeckvorrichtung (1) ferner den inneren Bereich, der ein innerer rohrförmiger Bereich (4) ist, und eine zweite Stützeinrichtung (8) aufweist, die den inneren rohrförmigen Bereich (4) in einem radial gedehnten Zustand hält, wobei das Verfahren ferner den Schritt des Entfernens der zweiten Stützeinrichtung (8) vor dem Schritt des Entfernens der ersten Stützeinrichtung (6) aufweist, so daß sich der innere rohrförmige Bereich (4) radial zusammenzieht.

**Revendications**

**1.** Dispositif couvrant destiné à couvrir un objet allongé, comprenant :

- un élément élastique plié (2) ayant une partie intérieure (4) et au moins une partie tubulaire extérieure disposée coaxialement (3) se superposant à ladite partie intérieure (4), ladite partie intérieure (4) et ladite partie tubulaire extérieure (3) étant jointes de façon continue au niveau d'un bord circonférentiel (9),

    **caractérisé par**

- un premier support creux (6) disposé coaxialement autour de ladite partie intérieure (4), ledit premier support creux (6) maintenant ladite partie tubulaire extérieure (3) en extension radiale et étant adapté pour être retiré progressivement de ladite partie tubulaire extérieure (3) en commençant par l'extrémité (6A) de celui-ci la plus proche dudit bord circonférentiel (9).

**2.** Dispositif couvrant selon la revendication 1, dans lequel ladite partie intérieure est une partie tubulaire intérieure (4) et comprenant en outre un deuxième support (8) maintenant ladite partie tubulaire intérieure (4) en extension radiale et étant adapté pour être retiré progressivement de ladite partie tubulaire intérieure (4).

**3.** Dispositif couvrant selon la revendication 1, dans lequel ledit premier support creux (6) est disposé sur la surface extérieure de ladite partie tubulaire extérieure (3).

**4.** Dispositif couvrant selon la revendication 1, dans lequel ledit premier support creux (6) est disposé sur la surface intérieure de ladite partie tubulaire extérieure (3).

**5.** Dispositif couvrant selon la revendication 2, dans lequel ledit premier support creux (6) est disposé sur la surface extérieure de ladite partie tubulaire extérieure (3).

**6.** Dispositif couvrant selon la revendication 2, dans lequel ledit premier support creux (6) est disposé sur la surface intérieure de ladite partie tubulaire extérieure (3).

**7.** Dispositif couvrant selon la revendication 2, dans lequel ledit deuxième support (8) est disposé sur la surface extérieure de ladite partie tubulaire intérieure (4).

**8.** Dispositif couvrant selon la revendication 2, dans lequel ledit deuxième support (8) est disposé sur la surface intérieure de ladite partie tubulaire intérieure (4).

**9.** Dispositif couvrant selon la revendication 5, dans lequel ledit deuxième support (8) est disposé sur la surface extérieure de ladite partie tubulaire intérieure (4).

**10.** Dispositif couvrant selon la revendication 5, dans lequel ledit deuxième support (8) est disposé sur la surface intérieure de ladite partie tubulaire intérieure (4).

**11.** Dispositif couvrant selon la revendication 6, dans lequel ledit deuxième support (8) est disposé sur la surface extérieure de ladite partie tubulaire intérieure (4).

**12.** Dispositif couvrant selon la revendication 6, dans lequel ledit deuxième support (8) est disposé sur la surface intérieure de ladite partie tubulaire intérieure (4).

**13.** Dispositif couvrant selon l'une quelconque des revendications 1 à 12, dans lequel ledit premier support creux (6) comprend un ruban flexible enroulé en hélice et formant des spires adjacentes, l'enveloppe des spires définissant une surface extérieure.

**14.** Dispositif couvrant selon la revendication 2 et l'une quelconque des revendications 3 à 13, dans lequel ledit deuxième support (8) est creux.

**15.** Dispositif couvrant selon la revendication 8, dans lequel ledit deuxième support creux (8) comprend un ruban flexible enroulé en hélice et formant des spires adjacentes, l'enveloppe des spires définissant une surface extérieure.

**16.** Dispositif couvrant selon la revendication 8, dans lequel au moins un élément élastique tubulaire est situé entre ladite partie tubulaire intérieure (4) et ledit deuxième support (8), ledit deuxième support (8) maintenant ledit élément tubulaire en extension radiale.

**17.** Dispositif couvrant selon l'une quelconque des revendications 1 à 16, dans lequel ledit élément élastique plié (2) a une élasticité et une épaisseur telles que, lors d'un retrait progressif dudit premier mandrin de support creux (6), chaque partie successive de ladite partie tubulaire extérieure (3) qui cesse d'être supportée se resserre radialement et se déplace dans la direction permettant de recouvrir chaque partie successive dudit élément élastique plié (2) sur l'objet allongé.

**18.** Dispositif couvrant selon l'une quelconque des revendications 1 à 17, dans lequel le diamètre intérieur étiré de ladite partie tubulaire extérieure (3) est d'au moins 150 mm, de préférence d'au moins 200 mm et idéalement d'au moins 250 mm.

**19.** Procédé pour couvrir un objet allongé, comprenant les étapes consistant à :

- préparer un dispositif couvrant (1), comprenant un élément élastique plié (2) ayant une partie intérieure (4) et au moins une partie tubulaire extérieure disposée coaxialement (3) se superposant à ladite partie intérieure (4), ladite partie intérieure (4) et ladite partie tubulaire extérieure (3) étant jointes de façon continue au niveau d'un bord circonférentiel (9) ; un premier support creux (6) disposé coaxialement autour de ladite partie intérieure (4), ledit premier support creux (6) maintenant ladite partie tubulaire extérieure (3) en extension radiale ;
- placer ledit dispositif couvrant (1) coaxialement à l'objet allongé (20) ;
- retirer ledit premier support creux (6) progressivement de ladite partie tubulaire extérieure (3) en commençant par l'extrémité (6A) de celui-ci la plus proche dudit bord circonférentiel (9) de telle manière que chaque partie successive de ladite partie tubulaire extérieure (3) qui cesse d'être supportée se resserre radialement.

**20.** Procédé selon la revendication 19, dans lequel ladite étape de retrait dudit premier support creux (6) fait bouger ladite partie tubulaire extérieure (3) dans la direction permettant de recouvrir chaque partie successive dudit élément élastique plié (2) sur l'objet allongé (20).

**21.** Procédé selon la revendication 19 ou 20, dans lequel ledit dispositif couvrant (1) comprend en outre ladite partie intérieure, qui est une partie tubulaire intérieure (4), et un deuxième support (8) maintenant ladite partie tubulaire intérieure (4) en extension radiale, ledit procédé comprenant en outre l'étape de retrait dudit deuxième support (8) avant l'étape de retrait dudit premier support creux (6) de telle manière que ladite partie tubulaire intérieure (4) se resserre radialement.

Fig. 1

Fig. 2

Fig. 3

Fig. 4

Fig. 5

Fig. 6A

Fig. 6B

EP 0 966 780 B1

Fig. 7A

Fig. 7B

Fig. 8

39 36B 36 33 37 36A 46A 46 43 47 46B 49
38A 32 38 38B

30

EP 0 966 780 B1

17

**Fig. 9**

EP 0 966 780 B1

Fig. 10

Fig. 11

Fig. 13

Fig. 12

20